# EUROPEAN PATENT APPLICATION

(11) **EP 3 425 936 A1**
(43) Date of publication of application: **09.01.2019**
(21) Application number: 16892354.8
(22) Date of filing: 02.11.2016
(51) Int. Cl.: H04W 4/08, H04W 72/04

(54) **COLLABORATIVE DATA TRANSMISSION METHOD, BASE STATION AND USER EQUIPMENT GROUP**

(30) Priority: 29.02.2016 CN 201610112291
(71) Applicant: ZTE Corporation, Shenzhen, Guangdong 518057 (CN)
(72) Inventor: YANG, Li, Shenzhen Guangdong 518057 (CN)
(74) Representative: Regimbeau
(86) International application number: PCT/CN2016/104295
(87) International publication number: WO 2017/148173

(57) **Abstract**

Provided are a group collaborative data transmission method, a base station, and a user equipment group. The method includes that: a base station identifies a plurality of UEs in a connected state, and associates and binds the plurality of UEs to form a UE group according to the attributes of each of the plurality of UEs; where each of the plurality of UEs in the UE group has at least one common attribute or one associated attribute; and the base station selects a master UE from the UE group as a master service object of data traffic transmission and other UEs in the UE group as slave UEs for uplink and downlink collaborative data transmission.

## Description

### TECHNICAL FIELD

The present application relates to the field of communications, for example, to a group collaborative data transmission method, a base station, and a user equipment group.

### BACKGROUND

Regardless of the radio access technology, RAT, supporting the mobile cellular system, any kind of mobile cellular system (including various network elements and terminal-class devices at the network side) is composed of basic network elements of the cellular mobile network (e.g., a core network, CN; a gateway, GW; a radio network controller/access network ,RNC/AN; a base station (NodeB/evoloved NodeB, NB/eNB); and a wireless access point (AP, Access Point)), a terminal (e.g., a user equipment/station (UE/STA)) and a basic coverage cell for providing mobile communication services/data transmission.

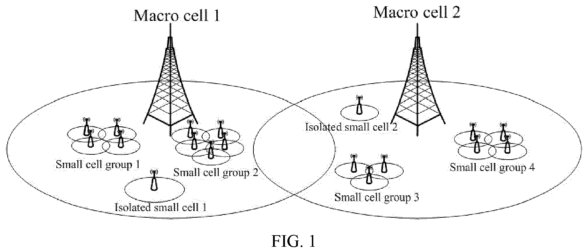

As shown in FIG. 1, a downlink coverage of the cell reflects that the base station node (eNB, AP, etc.) may achieve an effective transmission range controllable by downlink data.

A downlink load of the cell reflects the extent to which current downlink air interface radio resources of the base station node are used and occupied.

An uplink coverage of the cell reflects that the terminal (UE, STA, etc.) may achieve the effective transmission range controllable by uplink data, which may be different from the downlink coverage of the cell.
an uplink load of the cell reflects that the extent to which current uplink air interface radio resources of the base station node are used and occupied, which may be different from the downlink load of the cell.

In addition to the above-mentioned measurement quantities of the common radio resource management, RRM, related to a serving cell, other measurement quantities of related dedicated RRM that reflect a served UE are provided, such as a peak rate, average throughput, data transmission delay, a channel preemption success rate, etc.

The network elements of the cellular network allocates related baseband/radio frequency/radio resources and configures corresponding data radio bearers, DRBs, for various types of user traffic of the terminal. To achieve the continuity of the Quality of Service, QOS, of DRB-related user traffic during the movement process, and to achieve equalizing/reasonable use of uplink and downlink radio resources between base stations, the base station control node performs mobility control over reselection/redirection/switching/data distribution of the terminal in homogeneous and heterogeneous macro-micro cells by using a specific mobility procedure. In a broader sense, the above-mentioned base station control node may include: various nodes in the upstream network of managing downstream base station nodes, such as a radio network controller, RNC; a wireless gateway; a core network element (e.g., a mobility management entity, MME), etc. To simplify the description, the base station (a wireless node) is uniformly used for description below.

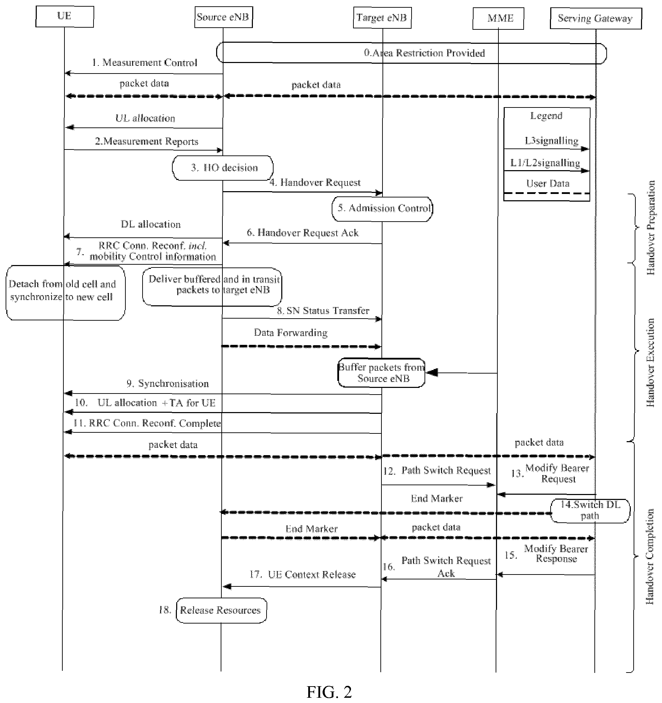

Taking FIG. 2 as an example, in a Long-Term Evolution, LTE, cellular system, after a source serving base station (Source eNB) receives measurement reports, MRs, from the terminal, UE, the Source eNB sequentially performs the operation of handover preparation, handover execution and handover complete according to a decision result of an internal handover decision (HO decision) module. The content of MRs is generated by the UE via a comparative analysis/evaluation of related parameters of the RRM measurement quantities (e.g. a threshold, a period, an offset, etc.) and dynamic measurement quantities obtained by the UE local actual measurement, where the related parameters of the RRM measurement quantities are configured by the source serving base station to the UE via a dedicated RRC signaling. The UE may trigger the reporting of the RRM measurement quantities in a periodic and/or event manner to provide a reference for the source serving base station to make the handover decision. The dedicated RRC signaling is usually transmitted by dedicated signaling radio bearers, SRBs, between the source serving base station and the UE. For example, in step 1, the Source eNB delivers related configuration information of the RRM measurement to the UE via the dedicated SRBs; in step 2, the UE submits information of RRM measurement quantities to the Source eNB via the dedicated SRBs; in step 7, the Source eNB delivers the related handover command and related configuration information of the target cell to the UE via the dedicated SRBs. The detailed description of other steps may be referred to the specification 36.300 of the 3rd Generation Partnership Project, 3GPP, protocol.

In some scenarios where some terminals are grouped and assembled, such as family members in a private car/a group of runners gathering together/a set of wearable devices on a user, these grouped terminal groups usually have a certain "associated and binding relationship" in the aspect of physically movement or user traffic, such as the movement in the same physical direction, the activities within the similar physical areas, and a certain association existing between demands of bearing the traffic data. If the base station can identify and utilize the above-mentioned "associated and binding relationship", the coordinative traffic data transmission for the grouped terminal objects may be implemented, that is, based on the data bearer capability of the respective GROUP-DRB corresponding to each of multiple UEs in the group, the base station jointly transmits user data traffic to a target terminal in a particular group. GROUP-DRB bearers may co-exist with dedicated DRB bearers of each of multiple UEs. The base station, according to common attributes or associated attributes of the data traffic, may choose to transmit data via the dedicated DRB bearers, or may choose to transmit data via the GROUP-DRB bearers. On the basis of this, how to perform the group collaborative data transmission for grouped objects based on some assembling scenarios of common grouped terminal is a problem to be solved.

### SUMMARY

To solve the above problem, embodiments of the present invention provide a group collaborative data transmission method, a base station, and a user equipment group.

A group collaborative data transmission method provided by an embodiment of the present invention is applied to a base station. The method includes the following steps.

Operating the base station to identify a plurality of user equipments, UEs, in the connected state, where a plurality of UEs have at least one common attribute or one associated attribute and are associated and bound to form a UE group.

Operating the base station to select a master UE from the UE group as a master service object of data traffic transmission, and other UEs in the UE group as slave UEs for uplink and downlink collaborative data transmission.

In the embodiment of the present invention, the method further includes the following steps.

Establishing a GROUP-DRB between each UE in the UE group and the base station, establishing and maintaining related configuration information of the GROUP-DRB and transmitting, via downlink, the related configuration information of the GROUP-DRB by using a dedicated SRB configured in each UE.

The related configuration information of the GROUP-DRB includes: related resource configuration information of a logical channel, a transmission channel and a physical channel, and a group collaboration identifier of the UE group, an identifier of the master UE and an identifier of each slave UE.

In the embodiment of the present invention, the method further includes the following steps.

When the base station transits data traffic to the master UE in the UE group, jointly transmits, via downlink, related data traffic in parallel by using a plurality of GROUP-DRBs.

In the embodiment of the present invention, the jointly transmitting, via downlink, the related data traffic in parallel by using a plurality of GROUP-DRBs further includes the following steps.

For downlink transmission, operating the base station to divide a data block to be transmitted in the data traffic into a plurality of sub-data blocks; and transmitting, via downlink, the plurality of sub-data blocks in parallel by using the plurality of GROUP-DRBs; or operating the base station to allocate a plurality of data blocks with different protocol serial numbers to different GROUP-DRBs according to a preset flow control mechanism, and transmitting, via downlink, the plurality of data blocks in parallel by using different GROUP-DRBs.

In an embodiment of the present invention, the method further includes the following steps.
for uplink transmission, operating the base station to identify a plurality of data blocks on the plurality of GROUP-DRBs via the group collaboration identifier and aggregate, reorder and merge the plurality of data blocks.

A group collaborative data transmission method provided by another embodiment of the present invention is applied to a user equipment group, where a plurality of UEs in the UE group have at least one common attribute or one associated attribute and are associated and bound to form the UE group. The method includes the following steps.

Determining a master UE from the UE group as a master service object of data traffic transmission, and other UEs in the UE group as slave UEs for uplink and downlink collaborative data transmission according to a selection of a base station.

In the embodiment of the present invention, the method further includes the following steps.

A group data radio bearer, GROUP-DRB, between each of the plurality of UEs in the UE group and the base station is established, and related configuration information of the GROUP-DRB is received, via downlink, by using a dedicated signaling radio bearer, SRB, configured in each of the plurality of UEs.

The related configuration information of the GROUP-DRB comprises related resource configuration information of a logical channel, a transmission channel and a physical channel, and a group collaboration identifier of the UE group, an identifier of the master UE and an identifier of each slave UE.

In the embodiment of the present invention, the method further includes the following steps.

When the master UE in the UE group transmits, via uplink, data traffic to the base station, jointly transmitting, via uplink, related data traffic in parallel by using a plurality of GROUP-DRBs.

In the embodiment of the present invention, the jointly transmitting, via uplink, the related data traffic in parallel by using the plurality of GROUP-DRBs includes the following steps.

For uplink transmission, operating the master UE to divide a data block to be transmitted in the data traffic into a plurality of sub-data blocks, distribute the sub-data blocks to the slave UEs via a local data transmission mechanism, and transmit, via uplink, the plurality of sub-data blocks in parallel by using the plurality of GROUP-DRBs; or operating the master UE to allocate a plurality of data blocks with different protocol serial numbers to GROUP-DRBs of the slave UEs according to a preset distribution mechanism, and transmit, via uplink, the plurality of data blocks in parallel by using GROUP-DRBs.

In the embodiment of the present invention, the method further includes the following steps.

For uplink transmission, operating each of the plurality of UEs in the UE group to send data traffic on the GROUP-DRBs in a packaging manner originally used for data traffic on dedicated DRBs.

In the embodiment of the present invention, the method further includes the following steps.

Operating the UE group to multicast data blocks successfully received via the downlink transmission to slave UEs in the UE group by using a local data transmission mechanism, or unicast data blocks successfully received via the downlink transmission to the master UE; and operating the master UE to aggregate, reorder and merge a plurality of data blocks received from the GROUP-DRBs by the master UE itself, and other data blocks received locally by slave UEs.

A base station provided by an embodiment of the present invention includes an identification unit and a selection unit.

The identification unit is configured to identify a plurality of user equipments, UEs, in a connected state and associate and bind the plurality of UEs to form a UE group according to attributes of each of the plurality of UEs, wherein the plurality of UEs in the UE group have at least one common attribute or one associated attribute.

The selection unit is configured to operate the base station to select a master UE from the UE group as a master service object of data traffic transmission and other UEs in the UE group as slave UEs for uplink and downlink collaborative data transmission.

In the embodiment of the present invention, the base station further includes an establishing unit.

The establishing unit is configured to establish a group data radio bearer, GROUP-DRB, between each of the plurality of UEs in the UE group and the base station, establish and maintain related configuration information of the GROUP-DRB, and transmit, via downlink, the related configuration information of the GROUP-DRB by using a dedicated signaling radio bearer, SRB, configured in each of the plurality of UEs.

The related configuration information of the GROUP-DRB comprises related resource configuration information of a logical channel, a transmission channel and a physical channel, and a group collaboration identifier of the UE group, an identifier of the master UE and an identifier of each salve UE.

In the embodiment of the present invention, the base station further includes a data transmission unit.

The data transmission unit is configured to, when the base station transmits data traffic to the master UE in the UE group, jointly transmit, via downlink, related data traffic in parallel by using a plurality of GROUP-DRBs.

In the embodiment of the present invention, the data transmission unit is further configured to, for downlink transmission, operate the base station to divide a data block to be transmitted in the data traffic into a plurality of sub-data blocks, and transmit, via downlink, the plurality of sub-data blocks in parallel by using the plurality of GROUP-DRBs; or operate the base station to allocate a plurality of data blocks with different protocol serial numbers to different GROUP-DRBs according to a preset flow control mechanism, and transmit, via downlink, the plurality of data blocks in parallel by using different GROUP-DRBs.

In the embodiment of the present invention, the data transmission unit is further configured to, for uplink transmission, operate the base station to identify the plurality of data blocks on the plurality of GROUP-DRBs via the group collaboration identifier and aggregate, reorder and merge the plurality of data blocks.

A user equipment group is provided by an embodiment of the present invention, where a plurality of UEs in the UE group have at least one common attribute or one associated attribute and are associated and bound to form the UE group. The UE group includes a master UE and slave UEs.

The master UE is determined from the UE group as a master service object of data traffic transmission according to a selection of a base station.

The slave UEs are determined from the UE group for uplink and downlink collaborative data transmission according to the selection of the base station.

In the embodiment of the present invention, each of the plurality of UEs in the UE group is configured to establish a group data radio bearer, GROUP-DRB, between each of the plurality of UEs in the UE group and the base station, and receive, via downlink, related configuration information of the GROUP-DRBs by using a dedicated signaling radio bearer, SRB, configured in each of the plurality of UEs.

The related configuration information of the GROUP-DRB comprises related resource configuration information of a logical channel, a transmission channel and a physical channel, and a group collaboration identifier of the UE group, an identifier of the master UE and an identifier of each slave UE.

In the embodiment of the present invention, the master UE is further configured to, when the master UE in the UE group transmits, via uplink, uplink data traffic to the base station, transmit, via uplink, related data traffic in parallel by using a plurality of GROUP-DRBs.

In the embodiment of the present invention, the master UE is further configured to, for uplink transmission, divide a data block to be transmitted in the data traffic into a plurality of sub-data blocks, distribute the plurality of sub-data blocks to the slave UEs via a local data transmission mechanism, and transmit, via uplink, the plurality of sub-data blocks in parallel by using the plurality of GROUP-DRBs; or allocate a plurality of data blocks with different protocol serial numbers to different GROUP-DRBs according to a preset flow control mechanism, and transmit, via downlink, the plurality of data blocks in parallel by using different GROUP-DRBs.

In the embodiment of the present invention, for uplink transmission, each of the plurality of UEs in the UE group is further configured to send data traffic on the GROUP-DRBs in a packaging manner originally used for data traffic on dedicated DRBs.

In the embodiment of the present invention, the UE group is further configured to multicast data blocks successfully received via the downlink transmission to slave UEs in the UE group by using a local data transmission mechanism, or unicast data blocks successfully received via the downlink transmission to the master UE.

The master UE is further configured to aggregate, reorder and merge a plurality of data blocks received from the GROUP-DRBs by the master UE itself, and other data blocks received locally by slave UEs.

Another embodiment of the present invention provides a non-transitory computer-readable storage medium storing computer-executable instructions, which are configured to perform the above method.

Another embodiment of the present invention further provides an electronic device. The electronic device includes at least one processor; and a memory which is communicatively connected to the at least one processor.

The memory stores instructions executable by the at least one processor, which executes the instructions to perform the above-mentioned method.

In technical solutions of the present invention, the base station identifies a plurality of UEs in the connected state, and associates and binds the plurality of UEs to form a user equipment group according to the attributes of each UE, where the plurality of UEs in the UE group have at least one common attribute or one associated attribute; and the base station selects a master UE from the UE group as a master service object of data traffic transmission, and other UEs in the UE group server as slave UEs for uplink and downlink collaborative data transmission. It can be seen that technical solutions of the present invention implements collaborative data transmission for grouped objects.

### BRIEF DESCRIPTION OF DRAWINGS

FIG. 1 is a schematic diagram of a mobile cellular network composed of a macro-micro base station (macro-micro cell).
FIG. 2 is a flowchart of a handover for a UE between eNBs under a network element of a same core network.
FIG. 3 is a flowchart 1 of a group collaborative data transmission method according to an embodiment of the present invention.
FIG. 4 is a flowchart 2 of a group collaborative data transmission method according to an embodiment of the present invention.
FIG. 5 is a model diagram of a group collaborative data transmission method based on a group according to an embodiment of the present invention.
FIG. 6 is a schematic diagram of group collaborative data downlink joint transmission based on a group according to an embodiment of the present invention.
FIG. 7 is a schematic diagram of group collaborative data uplink joint transmission based on a group according to an embodiment of the present invention.
FIG. 8 is a schematic diagram of group collaborative data downlink joint transmission between a 5G new RAT and a group composed of four UEs according to an embodiment of the present invention.
FIG. 9 is a structural diagram of a base station according to an embodiment of the present invention.
FIG. 10 is a structural diagram of a user equipment group according to an embodiment of the present invention.
FIG. 11 is a structural diagram of an electronic device according to an embodiment of the present invention.

### DETAILED DESCRIPTION

To provide a more detailed understanding of features and contents of embodiments of the present invention, implementation of embodiments of the present invention is described below in detail with reference to the accompanying drawings. The accompanying drawings are provided for reference only and are not intended to limit embodiments of the present invention.

To illustrate the technical solutions in the embodiments of the present invention more clearly, the related technical terms involved in the embodiments of the present invention are described below.

Access Control/Access Point, AC/AP, refers to a wireless access node of a WLAN system.

Carrier Aggregation, CA, refers to aggregation between carriers of inter-frequency points, including the aggregation among licensed carriers/unlicensed carriers of inter-frequency points.

Clear Channel Assessment-Energy Detection Threshold, CCA-ED TL, refers to an energy detection threshold for detecting the idle/busy (whether the unlicensed carriers are occupied) state of unlicensed carriers.

Channel Occupancy Time, COT, refers to a duration that an unlicensed carrier channel is occupied (the different countries and regions have different upper limits for regulation, for example the COT is 4ms in Japan), and when the time is reached, the occupied channel is forcibly released.

CSAT is short for Carrier Sensing Adaptive Transmission.

Device to Device, D2D, refers to direct data transmission between terminal devices.

Dual Connectivity, DC, refers to LTE dual connectivity or the connection between a single UEand two wireless network access nodes, where the DC may include eNB, AP, etc.

Random Backoff Mechanism, RBM, refers to prevent different nodes from simultaneously triggering the transmission when the different nodes monitor that the channel is idle.

Dynamic Frequency Selection, DFS, refers to a radar avoidance function. When the transmit, TX, power of a UE (the UE is in Slave Mode) is low, the UE doesn't have to execute the dynamic frequency selection.

DPI is short for Deep Packet Inspector.

Data Radio Bearer, DRB, refers to a set of wireless resources configured to bear the transmission of user traffic data.

Enhanced Distributed Channel Allocation, EDCA refers to an enhanced distributed channel allocation mechanism in a WLAN system.

Frame Based Equipment, FBE refers to a fixed timing relationship, a fixed frame length, a fixed CCA length, easy to synchronize, and poor access fairness.

Fixed Frame Period, FFP, refers to the sum of COT and Idle period (the duration of the idle period is at least 5% of the duration of the entire COT).

Licensed Assisted Access, LAA, refers to access and use of unlicensed carrier resources under the assisted control of a licensed carrier.

LAA Transmission Burst Length refers to the total duration to send each burst on an unlicensed carrier channel.

LAA secondary Scell refers to a secondary serving cell configured on an unlicensed carrier, including SDL mode with only downlink transmission and UL/DL mode with both uplink transmission and downlink transmission.

Load Based Equipment, LBE, refers to an unfixed frame length, a changeable CCA length, easier for ECCA to preempt a channel, asynchrony and slightly improved access fairness.

Listen before talk, LBT refers to listen the busy/idle status of a channel before accessing and using the channel on an unlicensed carrier (not used in China and North America).

Long Term Evolution, LET, refers to a typical 4G cellular wireless system in the 3GPP standard specification.

LTE WLAN Aggregation, LWA refers to resource aggregation between an LTE system and a WLAN system at the wireless access stratum.

Master Cell Group, MCG, refers to a set of multiple CA serving cells configured by MeNB for a UE, which may include an unlicensed carrier service cell.

Mobility Management Entity, MME, refers to a control panel network element of an LTE core network.

Occupied Channel Bandwidth, OCB refers to that in any COT period, the OCB of a UE in a U-Scell of an unlicensed carrier should be as wide as possible, such as at least 80%. If the COB is lower than 80%, resources will be wasted; and if multiple UEs share the bandwidth, the COB should be at least 80%.

Occupying Ratio, OR refers to a ratio of available unlicensed carrier resources occupied by a single eNB, which reflects the access fairness.

Quality of Service, QOS, refers to qualities of different user traffic.

Radio Access Technology, RAT, refers to a wireless access technique and system. For example, LTE and WLAN are two different RATs.

RL is short for Radio Link.

RRM is short for Radio Resource Management.

RRC is short for Radio Resource Control.

RRP is short for Reserved Resource Period.

RSNI is short for Received Signal to Noise Indicator.

Received Signal Strength Indicator, RSS, refers to the reflection of the overall radio load status on a certain carrier.

Secondary Cell Group, SCG, refers to a set of multiple CA serving cells configured by the SeNB for a UE, which may include an unlicensed carrier serving cell.

Short Control Signal, SCS, refers to short control signal which can be sent directly without performing CS first with small collision risk, and is not supported in Japan.

Serving Gateway, SGW, refers to user plane network element of a LTE core network.

Signaling Radio Bearer, SRB, refers to a radio bearer configured to transmit RRC control signaling.

Transmission Point, TP, refers to an abstract transceiver node, such as eNB and AP.

Ultra Dense Network, UDN, refers to that the UDN increases system capacity via enhanced air frequency division multiplexing.

Wireless Local Access Network, WLAN, refers to a wireless LAN system under the IEEE standard.

### Embodiment 1

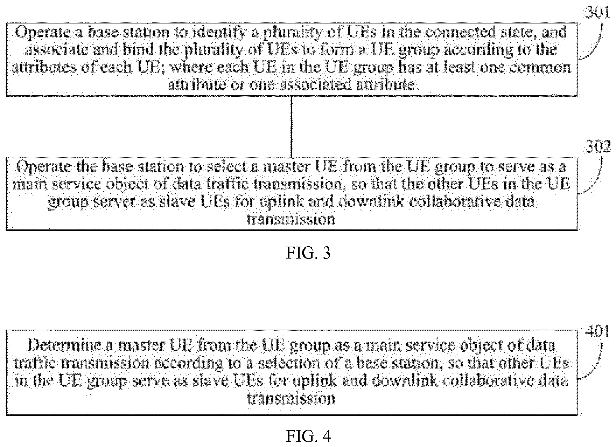

FIG. 3 is a flowchart of a group collaborative data transmission method according to an embodiment of the present invention. The group collaborative data transmission method according to the embodiment of the present invention is applied to a base station. As shown in FIG. 3, the group collaborative data transmission method includes the steps described below.

In step 301, the base station identify a plurality of UEs in the connected state and associate and bind the plurality of UEs to form a user equipment group according to attributes of each UE, where the plurality of UEs in the UE group have at least one common attribute or one associated attribute.

In the embodiment of the present invention, the base station has an identification unit. The identification unit identifies which UEs are in the RRC_Connected state (or other equivalent connected states) using its own implementation algorithm.

The common attribute or associated attribute may be: RRM parameter configuration, resource consumption, mobile migration and the like.

In step 302, the base station selects a master UE from the UE group as a master service object of data traffic transmission, and other UEs in the UE group as slave UEs for uplink and downlink collaborative data transmission.

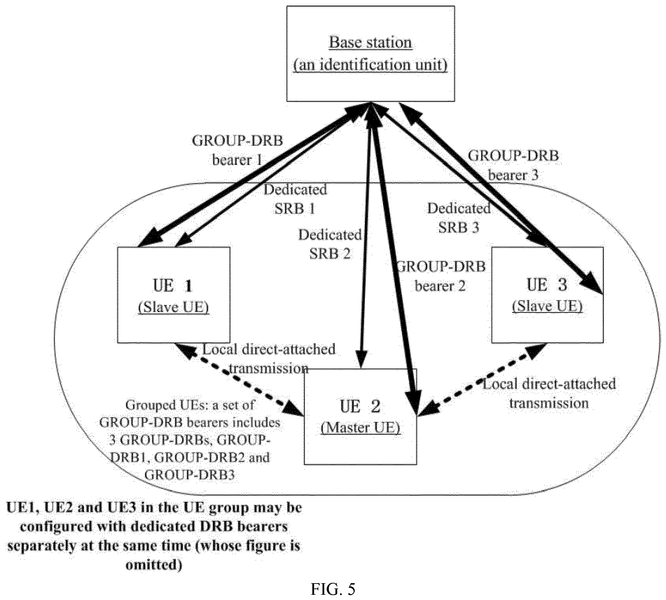

With reference to FIG. 5, in the embodiment of the present invention, the base station selects the master service object of data traffic transmission-the master UE from the UE group using its own implementation algorithm, so that other UEs in the UE group serve as slave UEs, which are used for uplink and downlink collaborative data transmission. The embodiment illustrates and explains the downlink collaborative data transmission. The base station acquires traffic condition of each UE in the UE group, that is, the base station acquires a traffic data downloading condition or a traffic data uploading condition of each UE, then the base station analyzes the traffic condition of each UE and defines a traffic data interaction UE as the master UE.

In the embodiment of the present invention, a GROUP-DRB is established between the base station and each UE in the UE group, related configuration information of the GROUP-DRB is established and maintained, and the related configuration information of the GROUP-DRB is transmitted, via downlink, by using a dedicated SRB configured in each UE.

The related configuration information of the GROUP-DRB includes: related resource configuration information of a logical channel, a transmission channel and a physical channel, and a group collaboration identifier of the UE group, an identifier of the master UE and an identifier of each slave UE.

After this, when the base station transmits data traffic to the master UE in the UE group, the base station jointly transmits, via downlink, related data traffic in parallel by using a plurality of GROUP-DRBs. The data traffic of the master UE doesn't need to be transmitted merely via the dedicated DRB of the master UE.

For downlink transmission, the base station divides a data block to be transmitted in the data traffic into a plurality of sub-data blocks, and transmits, via downlink, the plurality of sub-data blocks in parallel by using the plurality of GROUP-DRBs (which are configured with the same group collaboration identifiers); or the base station allocates a plurality of data blocks with different protocol serial numbers to different GROUP-DRBs according to a preset flow control mechanism, and transmits, via downlink, the plurality of data blocks in parallel by using the different GROUP-DRBs.

For uplink transmission, the base station identifies the plurality of data blocks on the GROUP-DRBs via the group collaboration identifier and aggregates, reorders and merges the plurality of data blocks. The UE group (a set of the master UE and a plurality of slave UEs) can identify that a plurality of user traffic data blocks on the GROUP-DRBs need to be aggregated, reordered and merged according to the group collaboration identifier,. Each UE in the UE group receives and analyzes data traffic on the corresponding GROUP-DRB in a similar way of originally receiving and analyzing data traffic on dedicated DRBs.

When the master UE is out of connected state, all UEs cluster relationships are automatically released, and the uplink and downlink cooperative data transmission mode automatically exits. When a slave UE is out of connected state, or when the common attribute or associated attribute of the slave UE and the UE group disappears, the slave UE automatically disconnects from the UE group, and not participates in the uplink and downlink cooperative data transmission mode.

After the dedicated SRBs of a UE are released by the RRC connection (or the UE is out of the equivalent RRC connected state), or the UE determines that the UE itself has disconnected from the UE group physically/logically based on a decision principle of the UE itself, the UE automatically releases the GROUP-DRB, not receives and analyzes a plurality of data blocks on the GROUP-DRB and not preforms the transmission on the GROUP-DRBs in a packaging manner. The UE automatically releases an association relationship with the master UE and not performs the direct-attached local data distribution transmission with the master UE. If the disconnected UE is the master UE, the base station releases all GROUP-DRBs established for the UE group.

After the collaborative data transmission of the embodiment of the present invention is stopped, the base station performs the uplink and downlink data transmission with the master UE by using the dedicated DRBs. If a GROUP-DRB is released during the cooperative data transmission, the lost data blocks corresponding to the GROUP-DRB may be retransmitted by using other cooperative DRBs or the dedicated DRB of the master UE.

In addition, the GROUP-DRBs need not achieve full-cell wireless coverage like the system broadcast multicast data traffic, and may cover a local area (the area where the UE group is located) like the dedicated DRBs.

The base station may simultaneously establish, configure and maintain a plurality of GROUP-DRB sets for different UEs, and each set may be distinguished by the group collaboration identifier.

### Embodiment 2

FIG. 4 is a flowchart of a group collaborative data transmission method according to an embodiment of the present invention. The group collaborative data transmission method according to the embodiment of the present invention is applied to a UE group, where a plurality of UEs in the UE group have at least one common attribute or one associated attribute and are associated and bound to form the UE group. As shown in FIG. 4, the group collaborative data transmission method includes the step described below.

In step 401, a master UE is determined from the UE group as a master service object of data traffic transmission and other UEs in the UE group is determined as slave UEs for uplink and downlink collaborative data transmission according to a selection of a base station.

With reference to FIG. 5, in the embodiment of the present invention, a GROUP-DRB is established between each UE in the UE group and the base station, and related configuration information of the GROUP-DRB is received, via downlink, by using a dedicated SRB configured in each UE.

The related configuration information of the GROUP-DRB includes: related resource configuration information of a logical channel, a transmission channel and a physical channel, and a group collaboration identifier of the UE group, an identifier of the master UE and an identifier of each slave UE.

In the embodiment of the present invention, the method further includes the following step.

When the master UE in the UE group transmits, via uplink, data traffic to the base station, the master UE jointly transmits, via uplink, related data traffic in parallel by using a plurality of GROUP-DRBs.

For uplink transmission, the master UE divides a data block to be transmitted in the data traffic into a plurality of sub-data blocks, distributes the plurality of sub-data blocks to the slave UEs via a local data transmission mechanism, and transmits, via uplink, the plurality of sub-data blocks in parallel by using the plurality of GROUP-DRBs; or the master UE allocates a plurality of data blocks with different protocol serial numbers to the GROUP-DRBs of the slave UEs according to a preset distribution mechanism, and transmits, via uplink, the plurality of data blocks in parallel by using the plurality of GROUP-DRBs.

For uplink transmission, each UE in the UE group sends the data traffic on the GROUP-DRBs in a packaging manner originally used for the data traffic on the dedicated DRBs.

In addition, the UE group multicasts data blocks successfully received via the downlink to the slave UEs in the UE group by using the local data transmission mechanism, or unicasts data blocks successfully received via the downlink to the master UE; and the master UE aggregates, reorders and merges a plurality of data blocks received from the GROUP-DRBs by the master UE itself, and other data blocks received locally by the slave UEs.

The UE group multicasts data blocks successfully received via downlink to the slave UEs in the Us group by using the local-attached data transmission mechanism (e.g., D2D, WLAN, Bluetooth and other direct-attached connection transmission technologies), or only unicasts data blocks successfully received via the downlink to the master UE, and then the master UE aggregates, reorders and merges data blocks received from the GROUP-DRB of the master UE itself and the data blocks received locally by the slave UEs.

The master UE may multicast, via uplink, uplink data blocks to be transmitted to the slave UEs based on a local direct-attached connection technology, or may separately unicast the uplink data blocks to be transmitted to a single selected slave UE according to the protocol packet sequence numbers. Then, the slave UEs respectively send, via uplink, the data blocks received from the Master UE by using the GROUP-DRBs in the packaging manner, and the base station aggregates and reorders all data blocks received from the GROUP-DRBs.

### Embodiment 3

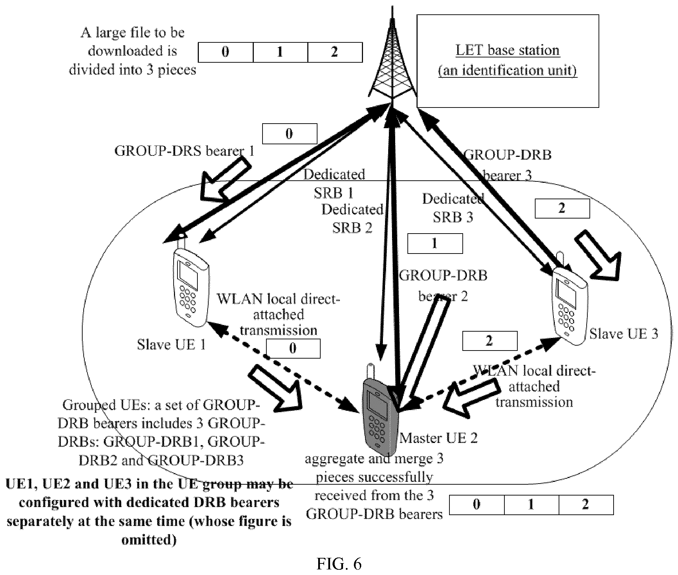

With reference to FIG. 6, there are three UEs under the coverage of an LTE macro base station cell: UE1, UE2 and UE3, and the three UEs are three passenger user terminals in the a private car. Because of different transmission requirements of respective data traffic, UE1, UE2 and UE3 are already in the RRC_Connected state, and are configured with respective different dedicated DRBs (because the respective data traffic performed by the users is different). The LTE macro base station is configured and activated with an identification unit based on an internal implementation. Based on the RRM measurement report information and the historical motion track information of the UE1, the UE2 and the UE3, the base station determines that the three UEs have a binding relationship in terms of spatial mobility, and therefore establishes a UE group for UE1, UE2 and UE3. Specific steps are described below.
1) At some point, when the UE2 performs a data traffic for downloading a large file, the base station selects UE2 as the Master UE from the UE group for the master service object of data traffic transmission using its own implementation algorithm, so that other UEs in the UE group, UE1 and UE3, serve as Slave UEs, which are used for downlink cooperative data transmission.
2) GROUP-DRB1, GROUP-DRB2 and GROUP-DRB3 are separately established between the base station and the three UEs in the UE group, and related configuration information for establishing and maintaining each of the GROUP-DRB1, GROUP-DRB2 and GROUP-DRB3 is sent, via downlink, by the corresponding dedicated SRB configured in each of UE1, UE2 and UE3. The related configuration information may be, for example, related resource configuration information of a logical channel/transmission channel/physical channel corresponding to the GROUP-DRB1/2/3, a group collaboration identifier of the UE group, a UE2 object identifier, etc..
3) When the base station transmits, via downlink, the large file data to the Master UE2 in the UE group, the base station may jointly transmit, via downlink, data block information of the related data traffic in parallel by using the three parallel GROUP-DRB1, GROUP-DRB2 and GROUP-DRB3. The base station may first divide the large data block to be transmitted into 3 pieces, and then transmit, via downlink, the 3 pieces in parallel by using the three GROUP-DRB1, GROUP-DRB2 and GROUP-DRB3 (which are configured with the same group collaboration identifier).
4) The UE group (a set of the Master UE2 and the two Slave UE1 and UE3) may identify that a plurality of user traffic data blocks on the GROUP-DRBs need to be aggregated, reordered and merged according to the group collaboration identifier. Each of UE1, UE2 and UE3 in the UE group receives and analyzes the data traffic on the corresponding GROUP-DRB1, GROUP-DRB2 and GROUP-DRB3 in a similar way of originally receiving and analyzing data traffic on the dedicated DRBs.
5) The Slave UE1 and UE3, via a local WLAN data transmission mechanism, unicast divided sub-data blocks successfully received in a downlink to the Master UE2. The Master UE2 aggregates, reorders and merges the divided sub-data blocks received from the GROUP-DRB2 by the UE2 itself and the data blocks received locally by the Slave UE1 and UE2.
6) At some point, when the dedicated SRBs of the UE1 are released by the RRC connection, the UE1 determines that the UE1 itself has disconnected from the UE group physically/logically based on a decision principle of the UE1 itself. The UE1 also automatically releases the GROUP-DRB1, not receives and analyzes the data blocks on the GROUP-DRB1 and not preforms the transmission on the GROUP-DRB1 in a packaging manner. The UE1 automatically releases an association relationship with the Master UE2, and not performs the direct-attached local data distribution transmission with the Master UE2.
7) In the process of releasing the GROUP-DRB1, the lost divided sub-data blocks which are no successfully transmitted may retransmitted by using other collaborative DRBs or the dedicated DRB of the Master UE2.

### Embodiment 4

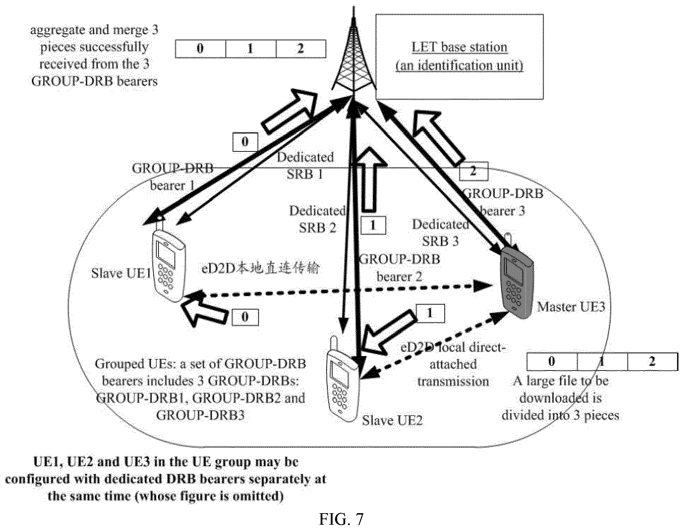

With reference to FIG. 7, there are three UEs under the coverage of an LTE macro base station cell: UE1, UE2 and UE3.

The three UEs separately belong to three runners that form a user group. Because of different transmission requirements of respective data traffic, UE1, UE2 and UE3 are already in the RRC_Connected state, and are configured with different dedicated DRBs (because the respective data traffic performed by the users is different). The LTE macro base station is configured and activated with an identification unit based on an internal implementation. Based on the RRM measurement report information and the historical motion track information of the UE1, the UE2 and the UE3, the base station determines that the three UEs have a binding relationship in terms of spatial mobility, and therefore establishes a UE group for UE1, UE2 and UE3. Specific steps are described below:
1) At some point, when the UE3 performs a data traffic for downloading a large file, the base station selects UE3 as the Master UE from the UE group for the master service object of data traffic transmission using its own implementation algorithm, so that other UEs in the UE group, UE1 and UE2, serve as Slave UEs, which are used for downlink cooperative data transmission.
2) GROUP-DRB1, GROUP-DRB2 and GROUP-DRB3 are separately established between the base station and the three UEs in the UE group, and related configuration information for establishing and maintaining each of the GROUP-DRB1, GROUP-DRB2 and GROUP-DRB3 is sent, via downlink, by the corresponding dedicated SRB configured in each UE1, UE2 and UE3. The related configuration information may be, for example, related resource configuration information of a logical channel/transmission channel/physical channel corresponding to the GROUP-DRBs, a group collaboration identifier of the UE group, a Master UE3 object identifier, etc..
3) When the base station uploads the large file to the Master UE3 in the UE group, related data traffic may be jointly transmitted, via uplink, in parallel by using the three parallel GROUP-DRB1, GROUP-DRB2 and GROUP-DRB3. The Master UE3 may divide large data blocks to be uploaded into 3 small pieces, distribute the 3 small pieces to the Slave UE1 and UE2 via an eD2D data transmission mechanism, and then operate the GROUP-DRB1, GROUP-DRB2 and GROUP-DRB3 to transmit, via uplink, the 3 small pieces in parallel.
4) The three UEs in the UE group send the data traffic on the GROUP-DRBs in a similar way of originally sending data traffic on the dedicated DRBs in a packaging manner.
5) At some point, when the UE3 determines that the UE itself has disconnected from the UE group physically based on a decision principle of the UE3 itself, the UE3 automatically releases the GROUP-SRB3, not receives and analyzes the data blocks on the GROUP-DRB3 and not preforms the transmission on the GROUP-DRB3 in a packaging manner. Because the Master UE3 has already disconnected, the base station releases all GROUP-DRBs established for the UE group.
6) In the process of the above-mentioned collaborative uplink data transmission, lost data blocks which are no successfully transmitted may retransmitted by using the dedicated DRBs of the UE3.

### Embodiment 5

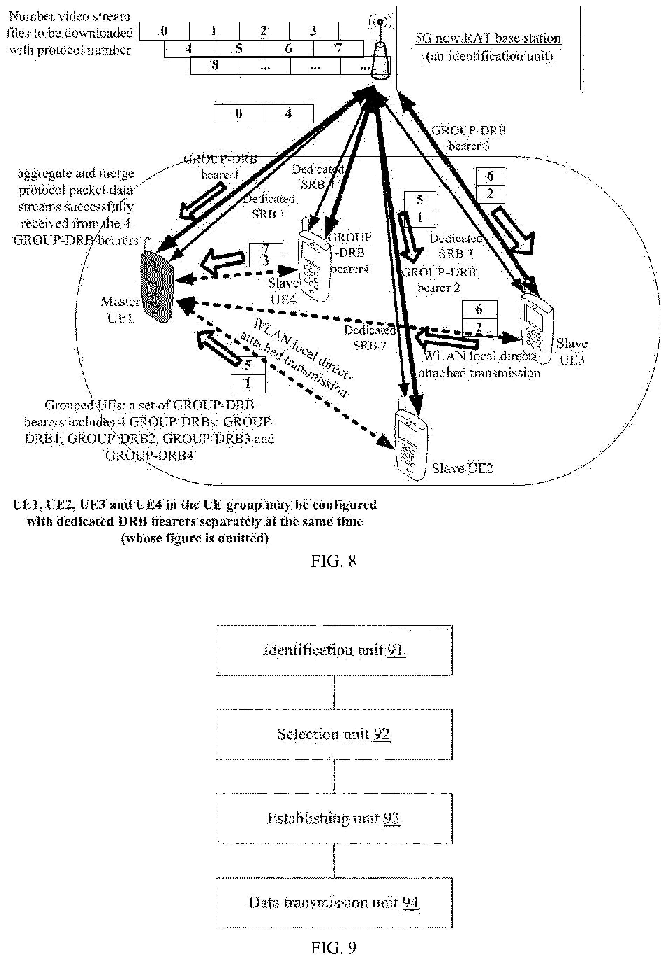

With reference to FIG. 8, there are four UEs under the coverage of a 5G new RAT base station cell: UE1, UE2, UE3 and UE4. Because of different transmission requirements of respective traffic data, UE1, UE2, UE3, and UE4 are already in the RRC equivalent connected state with the 5G new RAT base station, and are configured with different dedicated DRBs (because the respective data traffic performed on the different devices are different). The 5G new RAT base station is configured and activated with an identification unit based on an internal implementation. Based on the RRM measurement report information and the historical motion track information of the UE1, the UE2, the UE3 and the UE4, the base station determines that the four UEs have a binding relationship in terms of spatial mobility, and therefore, establishes a UE group for the UE1, the UE2, the UE3 and the UE4. Specific steps are described below.
1) At some point, when the UE1 performs a data traffic for downloading a video stream, the base station selects UE1 as the Master UE from the UE group for the master service object of data traffic transmission using its own implementation algorithm, so that other UEs in the UE group, UE2, UE3 and UE4, serve as slave UEs, which are used for cooperative data transmission.
2) GROUP-DRB1, GROUP-DRB2, GROUP-DRB3 and GROUP-DRB4 are separately established between the base station and each of the four UEs in the UE group, and related configuration information for establishing and maintaining each of the GROUP-DRB1, GROUP-DRB2, GROUP-DRB3 and GROUP-DRB4 is sent, via downlink, by the corresponding dedicated SRB configured in each of UE1, UE2, UE3 and UE4. The related configuration information may be, for example, related resource configuration information of a logical channel/transmission channel/physical channel corresponding to the GROUP-DRB1/2/3/4, a group collaboration identifier, a UE1 object identifier, etc..
3) When the base station transmits, via downlink, the video stream data to the Master UE1 in the UE group, the base station may jointly transmit, via downlink, data block information of the related data traffic in parallel by using the four parallel GROUP-DRB1, GROUP-DRB2, GROUP-DRB3 and GROUP-DRB4. The base station may first number video stream data blocks with specific protocol numbers, and then transmit, via downlink, each video stream protocol data packet in parallel by using each of the four GROUP-DRB1, GROUP-DRB2, GROUP-DRB3 and GROUP-DRB4 (which are configured with the same group collaboration identifier).
4) The UE group (a set of the Master UE1 and the three Slave UE2, UE3 and UE4) may identify that a plurality of user traffic protocol data packets on the GROUP-DRBs need to be aggregated, reordered and merged according to the group collaboration identifier,. Each of UE1 and the three Slave UE2, UE3 and UE4 in the UE group receives and analyzes the data traffic on the corresponding GROUP-DRB1, GROUP-DRB2, GROUP-DRB3 and GROUP-DRB4 in a similar way of originally receiving and analyzing data traffic on the dedicated DRBs.
5) The Slave UE2, UE3 and UE4, via a local WLAN data transmission mechanism, unicast the protocol data packets successfully received in a downlink to the Master UE1. The Master UE1 aggregates, reorders and merges the protocol data packets received from the GROUP-DRB1 by the UE1 itself, and the protocol data packets received locally by the Slave UE2, UE3 and UE4.
6) At some point, when the dedicated SRBs of the UE4 are released by the RRC connection, the UE4 determines that the UE4 itself has disconnected from the UE group physically/logically based on a decision principle of the UE4 itself. The UE4 also automatically releases the GROUP-DRB4, not receives and analyzes the data blocks on the GROUP-DRB4 and not performs the transmission on the GROUP-DRB4 in a packaging manner. The UE4 automatically releases an association relationship with the Master UE1, and not performs the direct-attached local data distribution transmission with the Master UE1.
7) In the process of releasing the GROUP-DRB4, lost protocol data packets which are no successfully transmitted may retransmitted by using other collaborative DRBs or the dedicated DRBs of the Master UE1.

### Embodiment 6

FIG. 9 is a structural diagram of a base station according to an embodiment of the present invention. With reference to FIG. 9, the base station includes an identification unit 91 and a selection unit 92.

The identification unit 91 is configured to identify a plurality of UEs in the connected state and associate and bind the plurality of UEs to form a UE group, where the plurality of UEs in the UE group have at least one common attribute or one associated attribute.

The selection unit 92 is configured to operate the base station to select a master UE from the UE group as a master service object of data traffic transmission and other UEs in the UE group as slave UEs for uplink and downlink collaborative data transmission.

The base station further includes an establishing unit 93.

The establishing unit 93 is configured to establish a GROUP-DRB between each UE in the UE group and the base station, establish and maintain related configuration information of the GROUP-DRB and transmit, via downlink, the related configuration information of the GROUP-DRB by using a dedicated SRB configured in each UE.

The related configuration information of the GROUP-DRB includes: related resource configuration information of a logical channel, a transmission channel and a physical channel, and a group collaboration identifier of the UE group, an identifier of the master UE and and identifier of each slave UE.

The base station further includes: a data transmission unit 94.

The data transmission unit 94 is configured to, when the base station sends data traffic to the master UE in the UE group, jointly transmit, via downlink, related data traffic in parallel by using a plurality of GROUP-DRBs.

The data transmission unit 94 is further configured to, for downlink transmission, operate the base station to divide a data block to be transmitted in the data traffic into a plurality of sub-data blocks, and transmit, via downlink, the plurality of the sub-data blocks in parallel by using the multiple GROUP-DRBs; or operate the base station to allocate a plurality of data blocks with different protocol serial numbers to different GROUP-DRBs according to a preset flow control mechanism, and transmit, via downlink, the plurality of data blocks in parallel by using different GROUP-DRBs.

The data transmission unit 94 is further configured to, for uplink transmission, operate the base station to identify the plurality of data blocks on the plurality of GROUP-DRBs via the group collaboration identifier and aggregate, reorder and merge the plurality of data blocks.

It is to be understood by those skilled in the art that implementation of functions of various units of the base station of FIG. 9 may be understood with reference to the description of the foregoing group collaborative data transmission method. The functions of the various units of the base station of FIG. 9 may be implemented by at least one program running on a processor or by at least one logic circuit.

### Embodiment 7

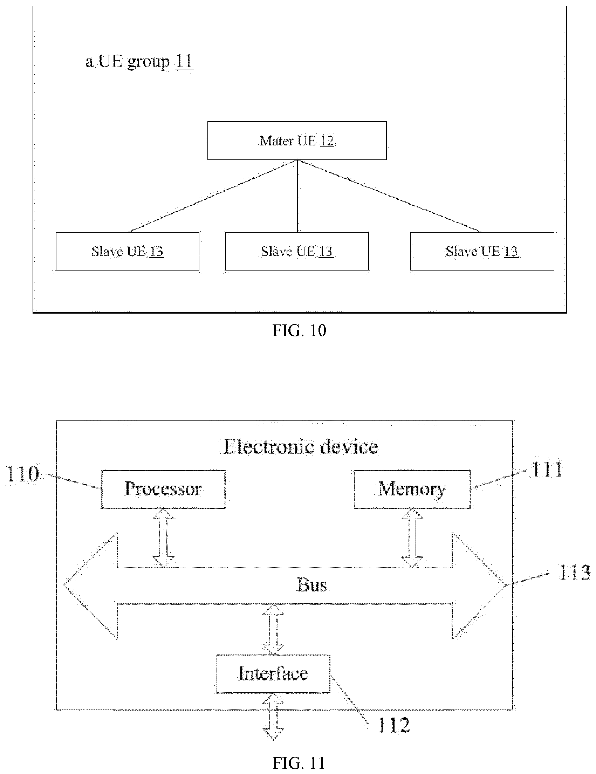

FIG. 10 is a structural diagram of a UE group according to an embodiment of the present invention. With reference to FIG. 10, a plurality of UEs in the UE group have at least one common attribute or one associated attribute and are associated and bound to form the UE group. The UE group 11 includes: a master UE 12 and slave UEs 13.

The master UE 12 is determined from the UE group 11 as a master service object of data traffic transmission according to a selection of a base station.

The slave UEs 13 is determined from the UE group 11 for uplink and downlink collaborative data transmission according to the selection of the base station.

Each of plurality of UEs in the UE group 11 is configured to establish a GROUP-DRB between each UE and the base station, and receive, via downlink, related configuration information of the GROUP-DRB by using a dedicated SRB configured in each UE.

The related configuration information of the GROUP-DRB includes related resource configuration information of a logical channel, a transmission channel and a physical channel, and a group collaboration identifier of the UE group 11 and an identifier of the master UE 12.

The master UE 12 is further configured to, when the master UE 12 transmits, via uplink, uplink data traffic to the base station, the master UE 12 jointly transmits, via uplink, related data traffic in parallel by using the plurality of GROUP-DRBs.

The master UE 12 is further configured to, for uplink transmission, divide a data block to be transmitted in the data traffic into a plurality of sub-data blocks, distribute the plurality of sub-data blocks to the slave UEs 13 via a local data transmission mechanism, and transmit, via uplink, the plurality of sub-data blocks in parallel by using the multiple GROUP-DRBs; or allocate a plurality of data blocks with different protocol serial numbers to the GROUP-DRBs of the slave UEs according to a preset distribution mechanism, and transmit, via uplink, the plurality of data blocks in parallel by using GROUP-DRBs.

For uplink transmission, each UE in the UEs group 11 is further configured to send data traffic on the GROUP-DRBs in a packaging manner originally used for data traffic on dedicated DRBs.

The UEs group 11 is further configured to multicast data blocks successfully received via the downlink transmission to slave UEs in the UE group by using a local data transmission mechanism, or unicast data blocks successfully received via the downlink transmission to the master UE 12.

The master UE 12 is further configured to aggregate, reorder and merge the plurality of data blocks received from the GROUP-DRBs by the master UE 12 itself, and the data blocks received locally by slave UEs 13.

It is to be understood by those skilled in the art that implementation of functions of various units of the master UE 12 and the slave UEs 13 in the UE group 11 of FIG. 10 may be understood with reference to the description of the foregoing group collaborative data transmission method.

The present invention further provides a non-transitory computer-readable storage medium storing computer-executable instructions, which are configured to perform the method in any embodiment described above.

The present invention further provides a structural diagram of an electronic device. With reference to FIG. 11, the electronic device includes at least one processor 110 (FIG. 11 shows one processor 60 by way of example) and a memory 111, and, may further include a communication interface 112 and a bus 113.

The processor 110, the communication interface 112 and the memory 111 can communicate with each other via the bus 113. The communication interface 112 may be used for information transmission. The processor 110 may invoke logic instructions in the memory 111 to perform the above-mentioned method.

In addition, the logic instructions in the memory 111 may be implemented in the form of a software function unit and, when sold or used as an independent product, may be stored in a computer-readable storage medium.

As a computer-readable storage medium, the memory 111 is used for storing software programs and computer-executable programs, such as program instructions or modules corresponding to the method in embodiments of the present invention. The processor 110 runs the software programs, instructions and modules stored in the memory 111 to perform function applications and data processing, that is, to implement the method for group collaborative data transmission in the above-mentioned embodiments.

The memory 111 may include a program storage region and a data storage region, where the program storage region may store an operating system and an application program required by at least one function while the data storage region may store data created depending on use of a terminal device. In addition, the memory 111 may include a high-speed random access memory, and may further include a non-volatile memory.

The technical solution of the present invention may be embodied in the form of a software product that is stored in a storage medium and includes one or more instructions for enabling a computer device (which may be a personal computer, server, or network device, etc.) to perform all or part of the steps of the method provided in embodiments of the present invention. The foregoing storage medium may be a non-transitory storage medium, such as a U disk, mobile hard disk, read only memory, ROM, random access memory, RAM, magnetic disk, optical disk or another medium that can store program codes, or may be a transitory storage medium.

If not in collision, the solutions described in embodiments of the present invention may be combined with each other.

It is to be understood that the methods and smart devices disclosed by embodiments of the present invention may be implemented in other ways. The device embodiments described above are merely exemplary. For example, the unit division is merely a logical function division, and, in practice, the unit division may be implemented in other ways. For example, multiple units or components may be combined or may be integrated into another system, or some features may be omitted or not executed. Additionally, coupling, direct coupling or communication connection between the presented or discussed components may be indirect coupling or communication connection, via interfaces, between devices or units, and may be electrical, mechanical or in other forms.

The units described above as separate components may or may not be physically separated. Components presented as units may or may not be physical units, i.e., may be located in one place or may be distributed over multiple network units. Part or all of these units may be selected according to actual requirements to achieve objects of solutions of embodiments of the present invention.

Moreover, various function units in embodiments of the present invention may all be integrated in one second processing unit, or each unit may be used as a separate unit, or two or more units may be integrated into one unit. The integrated function unit may be implemented by hardware or may be implemented by hardware plus a software function unit.

The above are only embodiments of the present invention and are not intended to limit the present invention. It is easy for those skilled in the art to conceive modifications or substitutions within the technical scope of the present invention. These modifications or substitutions are within the scope of the present invention.

### INDUSTRIAL APPLICABILITY

The technical solutions of the present invention implement the group collaborative data transmission for the grouped objects.

## Claims

1. A group collaborative data transmission method, being applied to a base station, and comprising:
operating the base station to identify a plurality of user equipments, UEs, in a connected state, and associate and bind the plurality of UEs to form a UE group according to attributes of each of the plurality of UEs, wherein the plurality of UEs in the UE group have at least one common attribute or one associated attribute; and
operating the base station to select a master UE from the UE group as a master service object of data traffic transmission and other UEs in the UE group as slave UEs for uplink and downlink collaborative data transmission.

2. The method according to claim 1, further comprising:
establishing a group data radio bearer, GROUP-DRB, between the base station and each of the plurality of UEs in the UE group;
establishing and maintaining related configuration information of the GROUP-DRB; and
transmitting, via downlink, the related configuration information of the GROUP-DRB by using a dedicated signaling radio bearer, SRB, configured in each of the plurality of UEs;
wherein the related configuration information of the GROUP-DRB comprises related resource configuration information of a logical channel, a transmission channel and a physical channel, and a group collaboration identifier of the UE group, an identifier of the master UE and an identifier of each slave UE.

3. The method according to claim 2, further comprising:
when the base station transmits data traffic to the master UE in the UE group, jointly transmitting, via downlink, the data traffic in parallel by using a plurality of GROUP-DRBs.

4. The method according to claim 3, wherein the jointly transmitting, via downlink, the data traffic in parallel by using a plurality of GROUP-DRBs comprises:
for downlink transmission, operating the base station to divide a data block to be transmitted in the data traffic into a plurality of sub-data blocks; and transmitting, via downlink, the plurality of sub-data blocks in parallel by using the plurality of GROUP-DRBs; or
for downlink transmission, operating the base station to allocate a plurality of data blocks with different protocol serial numbers to different GROUP-DRBs according to a preset flow control mechanism, and transmitting, via downlink, the plurality of data blocks in parallel by using different GROUP-DRBs.

5. The method according to claim 3, further comprising:
for uplink transmission, operating the base station to identify a plurality of data blocks on the plurality of GROUP-DRBs via the group collaboration identifier and aggregate, reorder and merge the plurality of data blocks.

6. A group collaborative data transmission method, being applied to a user equipment, UE, group, wherein a plurality of UEs in the UE group have at least one common attribute or one associated attribute and are associated and bound to form the UE group, and comprising:
according to a selection of a base station, determining a master UE from the UE group as a master service object of data traffic transmission, and other UEs in the UE group as slave UEs for uplink and downlink collaborative data transmission.

7. The method according to claim 6, further comprising:
receiving, via downlink, related configuration information of a group data radio bearer, GROUP-DRB, by using a dedicated signaling radio bearer, SRB, configured in each of the plurality of UEs;
wherein the GROUP-DRB is established between each of the plurality of UEs in the UE group and the base station; and
wherein the related configuration information of the GROUP-DRB comprises related resource configuration information of a logical channel, a transmission channel and a physical channel, and a group collaboration identifier of the UE group, an identifier of the master UE and an identifier of each slave UE.

8. The method according to claim 7, further comprising:
when the master UE in the UE group transmits, via uplink, data traffic to the base station, jointly transmitting, via uplink, the data traffic in parallel by using a plurality of GROUP-DRBs.

9. The method according to claim 8, wherein the jointly transmitting, via uplink, the data traffic in parallel by using the plurality of GROUP-DRBs comprises:
for uplink transmission, operating the master UE to divide a data block to be transmitted in the data traffic into a plurality of sub-data blocks, distribute the sub-data blocks to the slave UEs via a local data transmission mechanism, and transmit, via uplink, the plurality of sub-data blocks in parallel by using the plurality of GROUP-DRBs; or
for uplink transmission, operating the master UE to allocate a plurality of data blocks with different protocol serial numbers to GROUP-DRBs of the slave UEs according to a preset distribution mechanism, and transmit, via uplink, the plurality of data blocks in parallel by using GROUP-DRBs.

10. The method according to claim 8, further comprising:
for uplink transmission, operating each of the plurality of UEs in the UE group to send data traffic on the GROUP-DRBs in a packaging manner originally used for data traffic on dedicated DRBs.

11. The method according to claim 8, further comprising:
operating the UE group to multicast data blocks successfully received via the downlink transmission to slave UEs in the UE group by using a local data transmission mechanism, or unicast data blocks successfully received via the downlink transmission to the master UE; and
operating the master UE to aggregate, reorder and merge a plurality of data blocks received from the GROUP-DRBs by the master UE itself, and other data blocks received locally by slave UEs.

12. Abase station, comprising:
an identification unit, which is configured to identify a plurality of user equipments, UEs, in a connected state and associate and bind the plurality of UEs to form a UE group according to attributes of each of the plurality of UEs, wherein the plurality of UEs in the UE group have at least one common attribute or one associated attribute; and
a selection unit, which is configured to operate the base station to select a master UE from the UE group as a master service object of data traffic transmission and other UEs in the UE group as slave UEs for uplink and downlink collaborative data transmission.

13. The base station according to claim 12, further comprising:
an establishing unit, which is configured to establish a group data radio bearer, GROUP-DRB, between each of the plurality of UEs in the UE group and the base station, establish and maintain related configuration information of the GROUP-DRB, and transmit, via downlink, the related configuration information of the GROUP-DRB by using a dedicated signaling radio bearer, SRB, configured in each of the plurality of UEs;
wherein the related configuration information of the GROUP-DRB comprises related resource configuration information of a logical channel, a transmission channel and a physical channel, and a group collaboration identifier of the UE group and an identifier of the master UE.

14. The base station according to claim 13, further comprising:
a data transmission unit, which is configured to, when the base station transmits data traffic to the master UE in the UE group, jointly transmit, via downlink, the data traffic in parallel by using a plurality of GROUP-DRBs.

15. The base station according to claim 14, wherein the data transmission unit is further configured to:
for downlink transmission, operate the base station to divide a data block to be transmitted in the data traffic into a plurality of sub-data blocks, and transmit, via downlink, the plurality of sub-data blocks in parallel by using the plurality of GROUP-DRBs; or
for downlink transmission, operate the base station to allocate a plurality of data blocks with different protocol serial numbers to different GROUP-DRBs according to a preset flow control mechanism, and transmit, via downlink, the plurality of data blocks in parallel by using different GROUP-DRBs.

16. The base station according to claim 14, wherein the data transmission unit is further configured to:
for uplink transmission, operate the base station to identify the plurality of data blocks on the plurality of GROUP-DRBs via the group collaboration identifier and aggregate, reorder and merge the plurality of data blocks.

17. A user equipment group, wherein a plurality of UEs in the UE group have at least one common attribute or one associated attribute and are associated and bound to form the UE group, comprising:
a master UE, which is determined from the UE group as a master service object of data traffic transmission according to a selection of a base station; and
slave UEs, which are determined from the UE group for uplink and downlink collaborative data transmission according to the selection of the base station.

18. The user equipment group according to claim 17, wherein each of the plurality of UEs in the UE group is configured to:
receive, via downlink, related configuration information of a group data radio bearer, GROUP-DRB, by using a dedicated signaling radio bearer, SRB, configured in each of the plurality of UEs;
wherein the GROUP-DRB is established between each of the plurality of UEs in the UE group and the base station; and
wherein the related configuration information of the GROUP-DRB comprises related resource configuration information of a logical channel, a transmission channel and a physical channel, and a group collaboration identifier of the UE group, an identifier of the master UE and an identifier of each slave UE.

19. The user equipment group according to claim 18, wherein the master UE is further configured to:
when the master UE in the UE group transmits, via uplink, uplink data traffic to the base station, jointly transmit, via uplink, the data traffic in parallel by using a plurality of GROUP-DRBs.

20. The user equipment group according to claim 19, wherein the master UE is further configured to:
for uplink transmission, divide a data block to be transmitted in the data traffic into a plurality of sub-data blocks, distribute the plurality of sub-data blocks to the slave UEs via a local data transmission mechanism, and transmit, via uplink, the plurality of sub-data blocks in parallel by using the plurality of GROUP-DRBs; or
for uplink transmission, allocate a plurality of data blocks with different protocol serial numbers to the GROUP-DRBs of the slave UEs according to a preset distribution mechanism, and transmit, via uplink, the plurality of data blocks in parallel by using GROUP-DRBs.

21. The user equipment group according to claim 19, wherein for uplink transmission, each of the plurality of UEs in the UE group is further configured to:
send data traffic on the GROUP-DRBs in a packaging manner originally used for data traffic on dedicated DRBs.

22. The user equipment group according to claim 19, wherein
the UE group is further configured to multicast data blocks successfully received via the downlink transmission to slave UEs in the UE group by using a local data transmission mechanism, or unicast data blocks successfully received via the downlink transmission to the master UE; and
the master UE is further configured to aggregate, reorder and merge a plurality of data blocks received from the GROUP-DRBs by the master UE itself, and other data blocks received locally by slave UEs.

23. A non-transitory computer-readable storage medium storing computer-executable instructions, which are configured to perform the method of any one of claims 1-5.

24. A non-transitory computer-readable storage medium storing computer-executable instructions, which are configured to perform the method of any one of claims 6-11.
